# EUROPEAN PATENT SPECIFICATION

(11) **EP 2 171 381 B1**
(45) Date of publication and mention of the grant of the patent: **26.09.2018**
(21) Application number: 08772434.0
(22) Date of filing: 07.07.2008
(51) Int. Cl.: F25D 27/00, G02B 6/00, F21V 33/00

(54) **REFRIGERATOR SHELF LED LIGHTING**
LED-BELEUCHTUNG FÜR KÜHLSCHRANKREGAL
ÉCLAIRAGE PAR DEL D'ÉTAGÈRE DE RÉFRIGÉRATEUR

(30) Priority: 20.07.2007 US 780703
(43) Date of publication of application: 07.04.2010
(73) Proprietor: Electrolux Home Products, Inc., Charlotte, NC 28262 (US)
(72) Inventor: HALL, David, L., Piedmont, SC 29673 (US); CHAUDHARY, Partap, Singh, Anderson, SC 29621 (US)
(74) Representative: Electrolux Group Patents
(86) International application number: PCT/US2008/069302
(87) International publication number: WO 2009/014885

(56) References cited:
- EP-A- 0 462 361
- EP-A- 1 222 885
- EP-A- 1 491 835
- EP-A- 1 909 122
- WO-A-98/14740
- DE-U1- 29 814 243
- US-A- 6 036 328
- US-A1- 2005 081 547

## Description

### CROSS-REFERENCE TO RELATED APPLICATIONS

Not applicable.

### BACKGROUND OF THE INVENTION

### Field of the Invention

The invention relates to illuminated refrigerator shelving for illuminating an interior space of a refrigerator.

### Description of Related Art

It is known to provide an illumination device within an interior space of a refrigerator. Conventional illumination devices for a refrigerator include light fixtures having an incandescent lamp. Such devices are often bulky and transmit unwanted heat to the interior of the refrigerator. An example of an illumination device is disclosed in US 2005/0081547.

It would be useful to provide an illumination device for a refrigerator that overcomes one or more of the above shortcomings.

### BRIEF SUMMARY OF THE INVENTION

In accordance with one aspect of the present invention, provided is a refrigerator illumination device for illuminating an interior space of a refrigerator, comprising: a panel, and an illuminator for introducing light into the panel along an edge of the panel, wherein a first surface of the panel includes a plurality of lines for diverting introduced light to a region that is outside of the panel, the panel further including a second surface substantially parallel to the first surface of the panel, and further wherein said plurality of lines form a substantially semilogarithmic grid and wherein the first surface further includes perpendicular lines running perpendicular to the lines that form the substantially semilogarithmic grid. Further provided is a refrigerator including the illumination device.

### BRIEF DESCRIPTION OF THE DRAWINGS

FIG. 1 is a perspective view of the interior of a refrigerator having illuminated shelves;
FIG. 2 is a perspective view of an illuminated refrigerator shelf;
FIG. 3 is a plan view of a portion of an illuminated refrigerator shelf; and
FIG. 4 is a side elevation view of the shelf of FIG. 3.

### DETAILED DESCRIPTION OF THE INVENTION

Provided is an illuminated shelf for illuminating an interior space of a refrigerator. Also provided is the refrigerator having one or more illuminated shelves for illuminating the refrigerator's interior space.

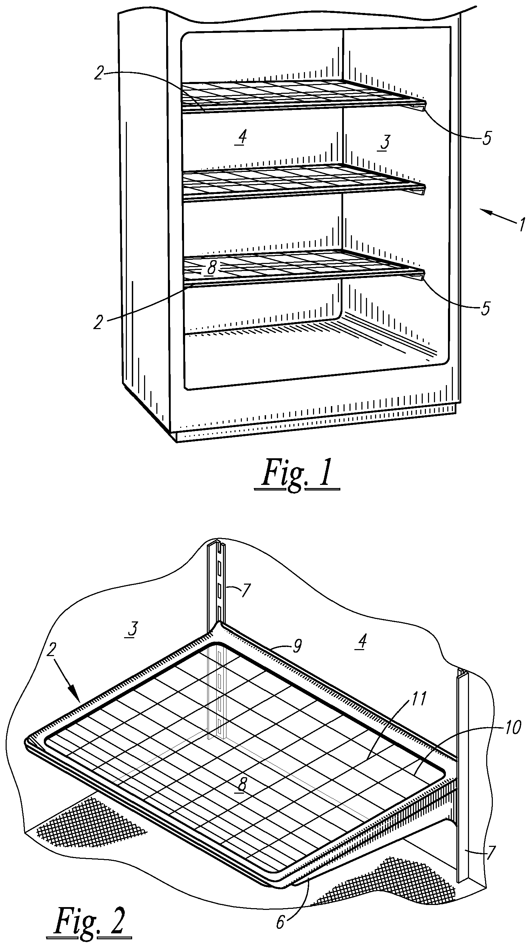

Figure 1 shows a perspective view of the interior of a refrigerator 1. A plurality of shelves 2 are provided within the interior of the refrigerator. The shelves 2 extend along a side wall 3 and rear wall 4 of the refrigerator 1, so that respective edges of the shelves 2 are adjacent the side 3 and rear wall 4. In the example embodiment of Figure 1, the shelves are supported along the side wall 3 by ledges 5 that extend into the interior of the refrigerator 1 from the side wall 3. A second side wall (not shown in Figure 1) includes corresponding ledges for supporting the shelves 2 in a horizontal position, which is substantially perpendicular to the side walls 3 and rear wall 4. In a further example embodiment shown in Figure 2, the shelves 2 are supported by brackets 6 that fit into vertical rails 7 located on the refrigerator's rear wall 4. The shelves 2 are vertically repositionable within the refrigerator 1, either among ledge 5 pairs or along vertical rails 7, depending on the configuration of the refrigerator 1.

The shelves 2 illuminate the interior of the refrigerator 1. An adequate illumination level, which allows an individual to comfortably use the refrigerator, is provided by one or more shelves 2. In an example embodiment, the adequate illumination level is provided by the combined illumination output of four shelves.

Each shelf 2 includes a transparent or translucent panel 8. For example, the panel 8 can include transparent or white glass. In an example embodiment the panel 8 includes tempered glass or safety glass. In an example embodiment, the panel is 3-8 mm thick.

As best seen in Figures 2 through 4, an illuminator 9 is provided along an edge of the shelf 2 and along an edge of the panel 8. In an example embodiment, the illuminator 9 is further provided along the rear wall 4 of the refrigerator 9, between the panel 8 and the rear wall 4. It is to be appreciated that the illuminator 9 can be provided along any shelf 2 edge, such as an edge that is adjacent to a side wall 3, for example. Furthermore, illuminators 9 can be provided along a plurality of shelf 2 edges, such as along two side walls 3, for example.

The illuminator 9 introduces light into the panel 8 along an edge of the panel 8. The panel 8 acts as a light guide for the light introduced into the panel. The panel 8 and illuminator 9 together provide an edge-lit device for illuminating the interior of the refrigerator.

The panel 8 includes a top surface and a bottom surface. A plurality of lines are engraved, for example, laser engraved or etched into one or both of the panel's 8 top and bottom surfaces. The plurality of lines cause a portion of the light that is introduced into the panel 8 via the illuminator 9 to be diverted to a region that is outside of the panel 8. The light that is diverted outside of the panel 8 by the plurality of lines illuminates the interior of the refrigerator 1.

In an example embodiment, the plurality of lines form a light-diverting grid. The light-diverting grid can be configured to provide a generally uniform distribution of light within the refrigerator and may provide a more uniform distribution of light than can be achieved with mere parallel lines. Furthermore, the light-diverting grid can provide a uniform distribution of light at a desired lighting level using very narrow gridlines.

In an example embodiment, only the bottom surface of each shelf's panel 8 includes the light-diverting grid. In an example embodiment, the edges of the panel 8 are covered or coated with a frosting or a reflective material 13, for example, polished aluminum, so that introduced light does not escape out of the edges of the panel 8, but is reflected back into the panel 8.

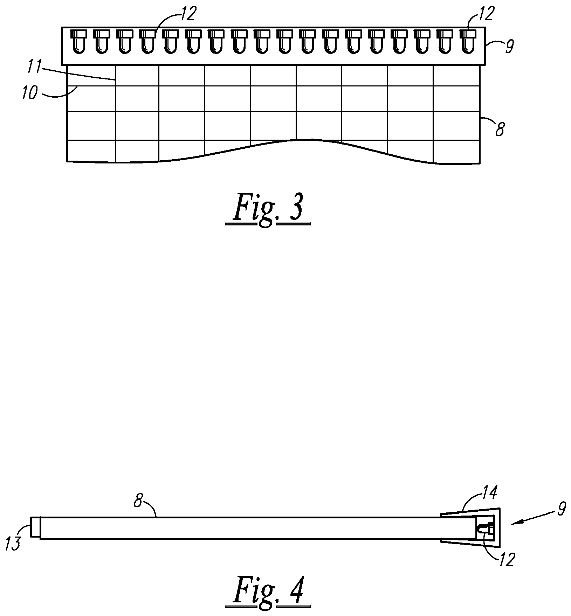

As best seen in Figures 2 and 3, the grid lines run parallel with and perpendicular to the illuminator 9 and the panel 8 edge that is adjacent to the illuminator 9. That is, the grid lines run parallel with and perpendicular to the illuminator 9 and the corresponding panel 8 edge into which the illuminator 9 introduces light into the panel 8. The grid lines that run parallel with the illuminator 9 and the panel 8 edge that is adjacent to the illuminator 9 are referred to herein as "parallel grid lines" 10. The grid lines that run perpendicular to the illuminator and the panel 8 edge that is adjacent to the illuminator 9 are referred to herein as "perpendicular grid lines" 11.

In an example embodiment, and as shown in Figures 2 and 3, the spacing between successive perpendicular grid lines 11 is uniform. By uniformly spacing the perpendicular grid lines 11, light introduced into the panel 8 from the illuminator 9 may be uniformly diffused and distributed to the interior of the refrigerator 1 across the length of the illuminator 9. It is to be appreciated that non-uniform distribution of light can be achieved by non-uniformly spacing the perpendicular grid lines 11. For example, if it is desired to provide more light to a region near the center of the panel 8, the spacing between successive perpendicular grid lines 11 in the center of the panel 8 can be decreased. The effect of decreasing the spacing between successive perpendicular grid lines in the center of the panel 8 is to increase the number if grid lines in the center of the panel 8, which would increase the amount of light diverted out of the panel 8 at its center.

The parallel grid lines 10 may also be uniformly spaced. However, such a configuration results in a region along the panel 8 near the illuminator 9 being more intensely illuminated than a region along the panel 8 further away from the illuminator 9. That is, if the parallel grid lines 10 are uniformly spaced, the illumination intensity from the panel 8 decreases in a direction away from the illuminator 9. The result of providing uniformly spaced parallel grid lines 10 is a more intense illumination of the interior of the refrigerator 1 near the illuminator 9 and a less intense illumination away from the illuminator 9. If the illuminator 9 is located along the rear wall 4 of the refrigerator 1, and the parallel grid lines 10 are uniformly spaced, food items located at the rear of the refrigerator 1 would be more brightly lit than food items located at the front of the refrigerator.

In the example embodiment of Figure 2, the parallel grid lines 10 are not uniformly spaced. The spacing between successive parallel grid lines 10 decreases in the direction away from the illuminator 9. That is, the spacing between successive parallel grid lines 10 further away from the illuminator 9 is less than the spacing between successive parallel grid lines 10 closer to the illuminator. By decreasing the spacing between successive parallel grid lines 10 in the direction away from the illuminator 9, substantially uniform illumination from the panel 8 can be achieved.

In an example embodiment, the grid is a semilogarithmic grid or a substantially semilogarithmic grid. That is, the perpendicular grid lines 11 are spaced generally uniformly, while the parallel grid lines 10 are spaced logarithmically or substantially logarithmically.

Details of the illuminator 9 can be seen in Figures 3 and 4. The illuminator 9 includes an array of light-emitting diodes (LEDs) 12 for generating the light that is introduced into the panel 8. The LEDs 12 are arranged along an edge of the panel 8 so that the panel is edge-lit by the illuminator 9. An illuminator housing 14 prevents light from escaping the illuminator 9, except in the direction of the edge of the panel 8.

In an example embodiment, the illuminator 9 produces white light for illuminating the interior of the refrigerator 1. In an example embodiment, the illuminator 9 includes more than 20 LEDs. In an example embodiment, the illuminator 9 includes 20 or fewer LEDs. For example, the illuminator 9 can include exactly 20 LEDs, exactly 18 LEDs, or fewer than 18 LEDs.

In an example embodiment, the illuminator 9 is attached to an edge of a shelf 2 and is vertically repositionable with the shelf 2. In an example embodiment, the illuminator 9 is attached to an interior wall of the refrigerator 1, for example, a rear wall 4, and the shelf 2 can be operatively engaged with and disengaged from the illuminator.

If the illuminator 9 is attached to an interior wall of the refrigerator 1 and, therefore, is not vertically repositionable with a shelf 2, the illuminator 9 can be hardwired to a source of electrical power. For example, the illuminator 9 can be hardwired to a source of 6 VDC or 12 VDC, depending on the requirements of the LEDs. If the illuminator 9 is attached to an edge of a shelf 2 and is vertically repositionable with the shelf 2, then a connector could be provided on the illuminator, shelf or bracket 6 to detachably connect the illuminator 9 to a source of electrical power. For example, a connector could be provided on the illuminator 9 for connecting to a corresponding connector located on a wall of the refrigerator 1, such as a rear wall 4. Alternatively, a connector could be provided on a shelf bracket 6 for connecting to a corresponding connector located on or near a vertical rail 7. Repositioning the shelf 2 and attached illuminator 9 would cause the illuminator to be sequentially unplugged from and plugged back into its source of electrical power.

In an example embodiment, an energized electrical bus is provided on least one of the vertical rails 7. A corresponding bracket 6 on the shelf 2 includes an outwardly biased electrode, for example, a spring-biased electrode, for engaging the electrical bus. Repositioning the shelf 2 and attached illuminator 9 causes the outwardly biased electrode to be sequentially disconnected from and reconnected to the electrical bus. The electrical bus, through the outwardly biased electrode on the bracket 6, provides electrical power to the illuminator 9. In an example embodiment, the electrode is a captive, spring-biased metallic ball. In an example embodiment, each vertical rail 7 includes at least one of an energized bus and a ground or neutral bus for connection to corresponding electrodes in the shelf brackets 6.

As can be seen in Fig. 2, each vertical rail 7 is "L" shaped and has two perpendicular vertically extending members. One vertically extending member of the rail 7 is generally parallel with the refrigerator rear wall 4 and includes mounting holes for the shelf bracket 6. The other vertically extending member of the rail 7 is generally parallel with the side walls 3 of the refrigerator and can include one or more electrical busses. In an example embodiment, the outwardly biased electrode projects from a shelf bracket 6 toward a side wall 3 and engages a corresponding electrical bus located on the vertically extending member of the rail 7 that is parallel with the side wall 3.

In an example embodiment, electrical power is supplied to the illuminator 9 through electromagnetic induction. A primary coil, for example, a high frequency primary coil, which lacks a transformer core, is mounted vertically along the rear wall 4 of the refrigerator. The shelves 2 can be vertically repositioned along the length of the primary coil. Each shelf 2 includes a small, magnetic core and a secondary coil, for example, a high frequency secondary coil. As the shelf 2 is vertically repositioned along the vertical rails 7, or from ledge-to-ledge 5, the shelf 2 is also repositioned along the primary coil. Electrical power is supplied to the illuminator 9 on the shelf 2 via electrical induction from the primary coil to the secondary coil through the small, magnetic core on the shelf 2.

The edge-lit panel described herein could be provided as a side panel within the refrigerator 1 and not as a part of a shelf 2. For example, the edge-lit panel could be mounted along a rear wall 4 of the refrigerator, extending parallel to the rear wall 4, rather than in a shelf 2, which extends substantially perpendicular to the rear wall 4. Multiple edge-lit panels could be provided within the refrigerator, such as along two side walls 3 and the rear wall 4.

It should be evident that this disclosure is by way of example and that various changes may be made by adding, modifying or eliminating details without departing from the fair scope of the teaching contained in this disclosure. The invention is therefore not limited to particular details of this disclosure except to the extent that the following claims are necessarily so limited.

## Claims

1. A refrigerator illumination device for illuminating an interior space of a refrigerator, comprising:
a panel, and
an illuminator (9) for introducing light into the panel (8) along an edge of the panel (8), wherein a first surface of the panel (8) includes a plurality of lines (10) for diverting introduced light to a region that is outside of the panel (8), the panel (8) further including a second surface substantially parallel to the first surface of the panel (8),
**characterized in that** said plurality of lines (10) form a substantially semilogarithmic grid and wherein the first surface further includes perpendicular lines (11) running perpendicular to the lines (10) that form the substantially semilogarithmic grid.

2. The illumination device of claim 1, wherein the illuminator (9) is located along an interior wall of the refrigerator between the panel (8) and the wall.

3. The illumination device of claim 1, wherein the grid is laser engraved into the surface of the panel (8).

4. The illumination device of claim 1, wherein the grid is etched into the surface of the panel (8).

5. The illumination device of claim 1, wherein the illuminator comprises a plurality of light emitting diodes (12) for generating the light introduced into the panel (8).

6. The illumination device of claim 1, wherein the grid includes:
a first plurality of parallel lines (10) that are parallel to said edge of the panel (8); and
a second plurality of parallel lines (10) that are parallel to the first plurality of parallel lines, wherein distances between successive lines of the first plurality of parallel lines are greater than distances between successive lines of the second plurality of parallel lines.

7. The illumination device of claim 6, wherein a plurality of lines (10) are engraved both of the first and second surfaces of the panel (8).

8. A refrigerator including the illumination device of any one of claims 1 - 7.

## Patentansprüche

1. Kühlschrankbeleuchtungsvorrichtung zum Beleuchten eines Innenraums eines Kühlschranks, umfassend:
eine Platte, und
einen Beleuchter (9) zum Einführen von Licht in die Platte (8) entlang einer Kante der Platte (8), wobei eine erste Oberfläche der Platte (8) eine Vielzahl von Linien (10) zum Umleiten eingeführten Lichts in eine Region, die sich außerhalb der Platte (8) befindet, aufweist, wobei die Platte (8) ferner eine zweite Oberfläche aufweist, die im Wesentlichen parallel zu der ersten Oberfläche der Platte (8) ist,
**dadurch gekennzeichnet, dass** die Vielzahl von Linien (10) ein im Wesentlichen halblogarithmisches Gitter ausbildet und wobei die erste Oberfläche ferner senkrechte Linien (11) aufweist, die senkrecht zu den Linien (10), die das im Wesentlichen halblogarithmische Gitter bilden, verlaufen.

2. Beleuchtungsvorrichtung nach Anspruch 1, wobei sich der Beleuchter (9) entlang einer Innenwand des Kühlschranks zwischen der Platte (8) und der Wand befindet.

3. Beleuchtungsvorrichtung nach Anspruch 1, wobei das Gitter in die Oberfläche der Platte (8) lasergraviert ist.

4. Beleuchtungsvorrichtung nach Anspruch 1, wobei das Gitter in die Oberfläche der Platte (8) hineingeätzt ist.

5. Beleuchtungsvorrichtung nach Anspruch 1, wobei der Beleuchter eine Vielzahl von Leuchtdioden (12) zum Erzeugen des in die Platte (8) eingeführten Lichts umfasst.

6. Beleuchtungsvorrichtung nach Anspruch 1, wobei das Gitter Folgendes aufweist:
eine erste Vielzahl von parallelen Linien (10), die parallel zu der Kante der Platte (8) sind; und
eine zweite Vielzahl von parallelen Linien (10), die parallel zu der ersten Vielzahl von parallelen Linien sind, wobei Abstände zwischen nachfolgenden Linien der ersten Vielzahl von parallelen Linien größer als Abstände zwischen nachfolgenden Linien der zweiten Vielzahl von parallelen Linien sind.

7. Beleuchtungsvorrichtung nach Anspruch 6, wobei eine Vielzahl von Linien (10) in sowohl die erste als auch die zweite Oberfläche der Platte (8) hineingraviert ist.

8. Kühlschrank, der die Beleuchtungsvorrichtung nach einem der Ansprüche 1 - 7 aufweist.

## Revendications

1. Dispositif d'éclairage de réfrigérateur servant à éclairer un espace intérieur d'un réfrigérateur, comprenant :
un panneau et
un appareil d'éclairage (9) servant à introduire de la lumière dans le panneau (8) le long d'un bord du panneau (8), une première surface du panneau (8) comprenant une pluralité de lignes (10) servant à dévier la lumière introduite vers une région qui se trouve à l'extérieur du panneau (8), le panneau (8) comprenant en outre une seconde surface essentiellement parallèle à la première surface du panneau (8), **caractérisé en ce que** ladite pluralité de lignes (10) forment une grille essentiellement semi-logarithmique et la première surface comprenant en outre des lignes perpendiculaires (11) s'étendant perpendiculairement aux lignes (10) qui forment la grille essentiellement semi-logarithmique.

2. Dispositif d'éclairage selon la revendication 1, dans lequel l'appareil d'éclairage (9) est situé le long d'une paroi intérieure du réfrigérateur entre le panneau (8) et la paroi.

3. Dispositif d'éclairage selon la revendication 1, dans lequel la grille est gravée au laser dans la surface du panneau (8).

4. Dispositif d'éclairage selon la revendication 1, dans lequel la grille est gravée au masque dans la surface du panneau (8).

5. Dispositif d'éclairage selon la revendication 1, dans lequel l'appareil d'éclairage comprend une pluralité de diodes électroluminescentes (12) servant à générer la lumière introduite dans le panneau (8).

6. Dispositif d'éclairage selon la revendication 1, dans lequel la grille comprend :
une première pluralité de lignes parallèles (10) qui sont parallèles audit bord du panneau (8) ; et
une seconde pluralité de lignes parallèles (10) qui sont parallèles à la première pluralité de lignes parallèles, des distances entre des lignes successives de la première pluralité de lignes parallèles étant supérieures à des distances entre des lignes successives de la seconde pluralité de lignes parallèles.

7. Dispositif d'éclairage selon la revendication 6, dans lequel une pluralité de lignes (10) sont gravées à la fois dans la première et la seconde surface du panneau (8).

8. Réfrigérateur comprenant un dispositif d'éclairage selon l'une quelconque des revendications 1 à 7.
